# EUROPÄISCHE PATENTSCHRIFT

(11) **EP 1 402 589 B1**
(45) Veröffentlichungstag und Bekanntmachung des Hinweises auf die Patenterteilung: **16.12.2009**
(21) Anmeldenummer: 02750820.9
(22) Anmeldetag: 03.07.2002
(51) Int. Cl.: H01M 8/04, H01M 8/06

(54) **VORRICHTUNG UND VERFAHREN ZUM VERDAMPFEN FLÜSSIGER MEDIEN**
DEVICE AND METHOD FOR EVAPORATING LIQUID MEDIA
DISPOSITIF ET PROCEDE POUR VAPORISER DES MILIEUX LIQUIDES

(30) Priorität: 04.07.2001 DE 10132370
(43) Veröffentlichungstag der Anmeldung: 31.03.2004
(73) Patentinhaber: P21 - Power for the 21st Century GmbH, 85649 Brunnthal (DE); Karlsruher Institut für Technologie, 76131 Karlsruhe (DE)
(72) Erfinder: BARTSCH, Armin, 81927 München (DE); HAUSINGER, Günter, 82131 Gauting (DE); PRECHTL, Peter, 81241 München (DE); ROBL, Christian, 94560 Offenberg (DE); WALTER, Jessica, D-71634 Ludwigsburg (DE); WALTER, Hermann, 81671 München (DE); SCHUBERT, Klaus, 76227 Karlsruhe (DE); BRANDNER, Jürgen, 69115 Heidelberg (DE)
(74) Vertreter: Müller, Thomas
(86) Internationale Anmeldenummer: PCT/DE2002/002417
(87) Internationale Veröffentlichungsnummer: WO 2003/005471

(56) Entgegenhaltungen:
- EP-A- 0 694 729
- DE-A- 10 054 918

## Beschreibung

Die vorliegende Erfindung betrifft eine Vorrichtung zum Verdampfen flüssiger Medien sowie ein Verfahren zum Verdampfen flüssiger Medien. Die Vorrichtung und das Verfahren sind insbesondere für Brennstoffzellensysteme beziehungsweise deren Betrieb geeignet.

Vorrichtungen zum Verdampfen flüssiger Medien beziehungsweise sogenannte Verdampfer werden in verschiedenen Bereichen der Technik, beispielsweise bei der Klima- und Kühltechnik eingesetzt. Ein zunehmend wichtigerer Bereich der Anwendung ist die Brennstoffzellentechnologie. Brennstoffzellen sind seit langem bekannt und haben insbesondere im Bereich der Automobilindustrie in den letzten Jahren erheblich an Bedeutung gewonnen. Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden. Dabei liegt den Brennstoffzellen die allgemeine Funktionsweise zugrunde, daß sich elektrisch neutrale Moleküle oder Atome miteinander verbinden und dabei Elektronen austauschen. Bei der Brennstoffzelle werden die im Redoxprozeß ablaufenden Oxidations- und Reduktionsprozesse über eine Membran räumlich getrennt. Solche Membranen haben die Fähigkeit Protonen auszutauschen, Gase jedoch zurückzuhalten. Die bei der Oxidation abgegebenen Elektronen lassen sich als elektrischer Strom durch einen Verbraucher leiten, beispielsweise den Elektromotor eines Kraftfahrzeugs.

Als gasförmige Reaktionspartner für die Brennstoffzelle werden üblicherweise Wasserstoff als Brennstoff und Sauerstoff als Oxidationsmittel verwendet. Will man die Brennstoffzelle mit einem leicht verfügbaren oder leichter zu speichernden Brennstoff, wie Erdgas, Methanol, Benzin, Diesel oder dergleichen betreiben, muß man den Kohlenwasserstoff in einer Anordnung zum Erzeugen beziehungsweise Aufbereiten eines Brennstoffs zunächst in ein wasserstoffreiches Gas umwandeln. Bei wenigstens einem Reaktorelement der Anordnung zum Erzeugen beziehungsweise zum Aufbereiten des Brennstoffs handelt es sich um eine Vorrichtung zur Verdampfung des verwendeten Brennstoffs. Der Verdampfer hat die Aufgabe, den Ausgangsstoff für den Brennstoff zunächst zu verdampfen, bevor dieser in dampfförmigem Zustand zur weiteren Behandlung in das nächste Reaktorelement, beispielsweise einen Reformer zur Herstellung des eigentlich verwendeten Wasserstoffs, eingeleitet wird.

Die bekannten Vorrichtungen zum Verdampfen flüssiger Medien beziehungsweise Verdampfer, haben eine Durchströmeinrichtung für das Medium, die mit einer Anzahl von Durchströmkanälen versehen ist. Die Durchströmkanäle verfügen an ihrer Eintrittsseite über eine Eintrittsöffnung und an ihrer Ausgangsseite über jeweils eine Austrittsöffnung. Das zu verdampfende Medium tritt über die Eintrittsöffnung in die Durchströmkanäle ein, durchströmt diese und wird dabei mittels einer Heizvorrichtung erhitzt beziehungsweise verdampft. Anschließend tritt das Medium aus der Austrittsseite über die Austrittsöffnung aus dem jeweiligen Durchströmkanal aus. Üblicherweise sind die Durchströmkanäle über ihre Eintrittsöffnungen mit einer gemeinsamen Zuleitung für das zu verdampfende Medium verbunden. In dieser Zuleitung kann eine Fördereinrichtung, beispielsweise eine Pumpe, vorgesehen sein, die das Medium in die Durchströmkanäle hinein pumpt und durch den herrschenden Überdruck durch diese hindurch leiten kann. Die Heizvorrichtung liefert die zum Erhitzen und Verdampfen notwendige Wärmeenergie. Beispielsweise kann die Heizvorrichtung eine Reihe von elektrisch betriebenen Heizpatronen aufweisen, die thermisch an die Durchströmkanäle gekoppelt sind. Dabei ist die Heizvorrichtung zum Beispiel aus einer oder mehreren Schichten gebildet, die jeweils abwechselnd mit Schichten von Durchströmkanälen gestapelt sind. Durch die wechselnde Schichtfolge von Heizvorrichtung und Durchströmkanälen ergibt sich eine effektive Wärmeübertragung auf die Durchströmkanäle. Im Betrieb wird das die Durchströmkanäle durchströmende Medium erhitzt beziehungsweise verdampft. Der erzeugte Dampf beziehungsweise das erzeugte Gas wird anschließend, beispielsweise einem Reformer zugeführt.

Gerade in Kraftfahrzeugen steht für den Verdampfer im allgemeinen nur ein kleiner Raum zur Verfügung. Es besteht daher das Bedürfnis, möglichst kleine Verdampfer zu bauen, die nur einen geringen Platzbedarf aufweisen. Im Hinblick auf das Bedürfnis nach Bauelementen mit einem geringen Platzbedarf ist es bereits aus dem Stand der Technik bekannt, Verdampfer in Mikrostrukturtechnik auszuführen. Diese Verdampfer können auf kleinstem Raum eine große Anzahl von Mikrokanälen aufweisen, deren Breite und Höhe vorzugsweise jeweils nur im Submillimeterbereich liegt.

Solche Verdampfer bestehen beispielsweise aus einer Schichtfolge einzelner Schichten, wobei die einzelnen Schichten jeweils eine Anzahl von Mikrokanälen aufweisen. Derartige Verdampfer können in einer Weise ausgebildet sein, daß durch den einen Teil der Schichten, beziehungsweise deren Kanäle, das zu verdampfende Medium strömt, auf das die Wärme übertragen werden soll, während durch die Kanäle der jeweils benachbarten Schichten ein von einer Heizvorrichtung aufgeheiztes Heizmedium fließt. Solche Verdampfer sind dann in Form spezieller Wärmetauscher ausgebildet.

Die Schichten können in einem solchen Fall derart angeordnet sein, daß die Mikrokanäle jeweils benachbarter Schichten in Kreuzstrombauweise oder in Parallelstrombauweise ausgerichtet sind.

In der EP 0 694 729 A1 wird eine zweistufige Verdampfereinheit beschrieben. Diese verfügt zunächst über einen als Kanal ausgebildeten Eingangsverteilerbereich. Aus diesem Kanal strömt das Medium über einen Verteilerkanal in Reaktionskanäle ein, in denen das Medium mittels einer Wärmeträgerfolie erhitzt wird.

Wenn solche Mikrowärmetauscher als Verdampfer eingesetzt werden sollen, ergeben sich jedoch eine Reihe von Nachteilen. So tritt beispielsweise das Problem auf, daß ein die entsprechenden Kanäle durchströmendes, zu verdampfendes flüssiges Medium zwar verdampft wird, daß aber die entstehenden Gase, beziehungsweise Gasblasen, noch nicht verdampftes Medium in Form von Flüssigkeitstropfen zusammen mit gasförmigem Medium aus den Mikrokanälen und damit aus dem Verdampfer heraustreiben.

Weiterhin kann es auf Grund von nicht konstanten Strömungsgeschwindigkeiten zu sogenannten Pulsationen kommen. Bei solchen Pulsationen handelt es sich um Schwingungen des die Mikrokanäle durchströmenden Mediums. Die den Verdampfer durchströmenden Medien haben damit keine konstante Strömungsgeschwindigkeit, die vielmehr auf Grund von äußeren Einflüssen oder auf Grund diskontinuierlicher Verdampfungsprozesse in Mikrokanälen variieren kann. Dadurch variiert auch die Verdampfungsrate des Verdampfers. Beim Betrieb eines Brennstoffzellensystems ist es jedoch wichtig, daß die einzelnen Reaktionsschritte in der Vorrichtung zum Erzeugen, beziehungsweise Aufbereiten des Brennstoffs, genau gesteuert ablaufen, um den Brennstoff, beispielsweise Wasserstoff, für die Brennstoffzelle erzeugen zu können.

Daher liegt der vorliegenden Erfindung die Aufgabe zugrunde, eine Vorrichtung sowie ein Verfahren zur Verdampfung flüssiger Medien bereitzustellen, die/das in der Lage ist, ein gleichmäßig verdampftes Medium bereitzustellen.

Diese Aufgabe wird gelöst durch die Bereitstellung einer Vorrichtung mit den Merkmalen gemäß dem unabhängigen Patentanspruch 1 und eines Verfahrens mit den Merkmalen gemäß dem unabhängigen Patentanspruch 13. Weitere Vorteile, Merkmale, Ausgestaltungen, Aspekte und Details der vorliegenden Erfindung ergeben sich aus den abhängigen Patentansprüchen, der Beschreibung und den beigefügten Zeichnungen. Merkmale und Details, die im Zusammenhang mit der erfindungsgemäßen Vorrichtung beschrieben sind, gelten dabei selbstverständlich auch für das erfindungsgemäße Verfahren, und umgekehrt.

Der Erfindung liegt die Idee zugrunde, den bislang monolithisch aufgebauten Verdampfer in zwei oder mehrere Bereiche zu teilen, welche jeweils miteinander über wenigstens einen Zwischenraum verbunden sind.

Demzufolge ist die Erfindung gerichtet auf eine Vorrichtung zum Verdampfen flüssiger Medien, die aufweist wenigstens einen Ersterhitzerteil zum Erhitzen eines flüssigen Mediums mit wenigstens einem Kanal zum Durchleiten des Mediums und wenigstens einer ersten Heizvorrichtung, wenigstens einen Zweiterhitzerteil zur weiteren Erhitzung des erhitzten Mediums, mit wenigstens einem Kanal zum Durchleiten des Mediums und wenigstens einer zweiten Heizvorrichtung, und zumindest einen Zwischenraum zwischen einem Ersterhitzerteil und einem Zweiterhitzerteil und/oder zwischen zwei Ersterhitzerteilen und/oder zwei Zweiterhitzerteilen zum Homogenisieren und/oder Verwirbeln und/oder weiteren Verdampfen sowie zum Weiterleiten des erhitzten Mediums vom Ausgang wenigstens eines Kanals eines Erhitzerteils zum Eingang wenigstens eines folgenden Erhitzerteils.

Die erfindungsgemäße Vorrichtung weist eine Reihe von Vorteilen auf. Auf Grund der in der Vorrichtung stattfindenden Verdampfungs-, Homogenisierungs- und Verwirbelungsprozesse wird zunächst eine gleichmäßige Temperierung im zweiten Bereich der Vorrichtung ermöglicht. Ein weiterer Vorteil besteht darin, daß die einzelnen Verdampfungsbereiche, nämlich der wenigstens eine Ersterhitzerteil und der wenigstens eine Zweiterhitzerteil sowie eventuell einzelne Ersterhitzerteile und/oder Zweiterhitzerteile untereinander über jeweilige Zwischenräume thermisch voneinander isoliert werden können. Dadurch wird eine gute Regelbarkeit sowie eine hohe Dynamik der Vorrichtung gewährleistet.

Damit handelt es sich bei dem erfindungsgemäßen Verdampfer quasi um einen zweistufigen oder mehrstufigen Verdampfer, wobei beispielsweise die erste Stufe zunächst zum Erhitzen des flüssigen Mediums bis zu einem Temperaturbereich dienen kann, bei welchem das Medium verdampfen kann. Pulsationen sowie Tröpfchenbildung und ähnliche, bisherigen Verdampfern inhärente, nachteilige Effekte werden von dem/den erfindungsgemäß verwendeten Zwischenraum/ Zwischenräumen abgefangen, der/die dem weiteren Verdampfen von Tröpfchen der Verwirbelung des verdampften Mediums, dem Druckausgleich von Pulsationen und/oder dem Homogenisieren des verdampften Mediums dient/dienen. In zumindest einer weiteren Verdampferstufe wird dann mittels eines vorzugsweise feiner regulierbaren Heizsystems das Medium weiter erhitzt. Vorzugsweise wird es dabei auf eine exakt einhaltbare Temperatur eingestellt.

Durch die erfindungsgemäße Anordnung der einzelnen Bauelemente der Verdampfungsvorrichtung kann ein homogenes, verdampftes, beziehungsweise gasförmiges Medium, ggfs. mit einer exakt vorgegebenen Temperatur am Ausgang der Verdampfervorrichtung bereitgestellt werden. Dabei ist die Erfindung nicht auf eine bestimmte Anzahl von Ersterhitzerteilen, Zweiterhitzerteilen und Zwischenräumen beschränkt. Im einfachsten Fall ist jeweils ein Ersterhitzerteil und ein Zweiterhitzerteil vorgesehen, mit einem dazwischen liegenden Zwischenraum. Es können jedoch auch mehrere Ersterhitzerteile und /oder Zweiterhitzerteile vorgesehen sein, wobei zwischen zwei Erhitzerteilen jeweils ein Zwischenraum vorgesehen ist, Die Anzahl der Erhitzerteile und Zwischenräume ergibt sich aus den jeweiligen Anforderungen an die Vorrichtung sowie deren Einsatzzweck.

Weiterhin ist die Erfindung nicht auf eine bestimmte Anzahl von Kanälen pro Erhitzerteil beschränkt. Im einfachsten Fall ist ein Kanal pro Erhitzerteil vorgesehen. Wenn der Erhitzerteil beispielsweise in Mikrotechnik ausgebildet ist, kann pro Erhitzerteil eine große Anzahl von Kanälen vorgesehen sein. Ebenso ist es denkbar, daß unterschiedliche Erhitzerteile unterschiedliche Anzahlen von Kanälen aufweisen. Die jeweils geeignete Anzahl von Kanälen ergibt sich aus den jeweiligen Anforderungen an die Vorrichtung sowie deren Einsatzzweck.

In ähnlicher Weise ist die Erfindung auch nicht auf eine bestimmte Anzahl von Heizvorrichtungen beschränkt. Beispielsweise kann jeder Erhitzerteil über eine eigene Heizvorrichtung verfügen. Dies ermöglicht eine sehr genaue Temperaturregelung und - führung. Es ist aber auch denkbar, daß nicht jeder Erhitzerteil über eine eigene Heizvorrichtung verfügt oder daß zwei oder mehr Erhitzerteilen jeweils eine gemeinsame Heizvorrichtung zugeordnet ist.

Die erfindungsgemäße Vorrichtung kann über einen Eingangsverteilerbereich verfügen, dem aus einer Zuleitung flüssiges Medium zugeführt wird, das dieser auf den Eingangsbereich des wenigstens einen Kanals von wenigstens einem Ersterhitzerteil - möglichst gleichmäßig - verteilt. Nach Durchlaufen durch den wenigstens einen Ersterhitzerteil wird der zum Erhitzen verwendete wenigstens eine Kanal des Ersterhitzerteils mit seiner Ausgangsseite in einen Zwischenraum einmünden, wo das Medium den beschriebenen Vorgängen der Homogenisierung und weiteren Verdampfung unterliegt. Nach dem Zwischenraum kann das Medium - je nach Ausgestaltung der Vorrichtung - in einen weiteren Ersterhitzerteil oder in einen Zweiterhitzerteil eintreten. Der Eingangsbereich respektive die Eintrittsöffnung oder der Eingang des wenigstens einen Kanals des nachfolgenden Erhitzerteils ist ebenso mit dem zumindest einen Zwischenraum verbunden, so daß durch den anliegenden Überdruck das nunmehr möglichst vollständig verdampfte Medium in den nachfolgenden Erhitzerteil, oder aber, bei mehreren nachfolgenden Erhitzerteilen, in den nachfolgenden Erhitzerteil und von dort über weitere Zwischenräume in weitere Erhitzerteile hineingedrückt wird, wo es möglichst vollständig verdampft und mittels der Regelheizvorrichtung auf die vorgegebene Temperatur eingestellt wird.

Für die Herstellung der Komponenten der erfindungsgemäßen Vorrichtung können verschiedene Techniken zum Einsatz kommen. So ist es beispielsweise möglich, den wenigstens einen Kanal für den wenigstens einen Ersterhitzerteil und den wenigstens einen Zweiterhitzerteil aus je einem Block herauszufräsen, herauszubohren oder mittels Lasertechnologie herauszubrennen. Die solcher Art hergestellten Komponenten können dann beispielsweise über jeweils wenigstens ein Zwischenrohr miteinander verbunden werden, wobei der im Inneren eines Zwischenrohrs entstandene Hohlraum als Zwischenraum fungieren kann. Unter einem Rohr ist hierbei jedes Bauteil zu verstehen, daß zwei Öffnungen aufweist, die dem Anschluß von Ersterhitzer- und Zweiterhitzerteil(en) dienen und das mit einer umlaufenden Wand versehen ist, welche die Öffnungen begrenzt. Die Form der Öffnungen kann rund, viereckig, oval, mehreckig oder von anderer Form sein.

Es ist allerdings auch möglich und wird in vielen Fällen bevorzugt werden, die erfindungsgemäße Vorrichtung mittels Verfahrenstechniken herzustellen, wie sie bei kleinen Strukturen Anwendungen finden können. Dementsprechend weist die Vorrichtung vorzugsweise wenigstens zwei übereinander angeordnete Schichten auf, wobei jede der Schichten dünnere Bereiche enthält (hergestellt beispielsweise durch Wegätzen des Schichtmaterials), welche die vom Medium durchströmten Bereiche bilden sowie dickere Bereiche (hergestellt beispielsweise durch Maskieren der Schicht), welche Wandungen zwischen den durchströmten Bereichen bilden und welche mit einer Rückseite an einer benachbarten Schicht oder einer Deckelschicht in Kontakt sind. Durch die dünneren und dickeren Bereiche können also die Kanäle und der wenigstens eine Zwischenraum in Kombination mit benachbarten Schichten gebildet werden.

Die Erfindung ist nicht auf die genannten Beispiele für Herstellungsverfahren beschränkt, so daß auch andere Herstellungstechniken möglich sind. Weiterhin ist es denkbar, die Vorrichtung durch beliebige Kombination unterschiedlicher Herstellungstechniken und Bauarten herzustellen.

Vorteilhaft können zumindest Bestandteile des wenigstens einen Ersterhitzerteils und/oder des wenigstens einen Zweiterhitzerteils in Mikrostrukturtechnik hergestellt sein.

Wenn diese Bauelemente in der zuvor beschriebenen Schichtbauweise hergestellt sind, kann das Wegätzen der dickeren und dünneren Bereiche der Schichten beispielsweise durch Mikrostrukturtechnik vorgenommen werden, wobei auch andere Verfahrensansätze der Mikrostrukturtechnik zum Herstellen der Bereiche verwendet werden können, beispielsweise Sputtering.

In vorteilhaften Ausführungsformen der Erfindung weist jede der Schichten der Verdampfungsvorrichtung somit wenigstens einen eigenen Zwischenraum auf, in den jeweils nur die Kanäle, die von der jeweiligen Schicht gebildet werden, einmünden. Die Schichtenabfolge kann hierbei größeren Variationen unterliegen. So ist es möglich, jede der mit Kanälen versehenen Schichten mit einer Deckelschicht zu dichten und diese beispielsweise aufeinander zu laminieren und zu verkleben, zu verschweißen oder durch Ultraschall miteinander zu verbinden. Es ist jedoch auch möglich, daß nur Kanäle aufweisende Schichten direkt aufeinander gestapelt werden. Auch ist es möglich, die mit Kanälen zur Verdampfung versehenen Schichten abwechselnd mit solchen Schichten anzuordnen, in denen beispielsweise Kanäle zur Durchleitung eines Heizmediums vorgesehen sind. Den Abschluß einer Stapelanordnung von solchen Schichten wird stets eine Deckelschicht bilden, wobei es aus Gründen der Ökonomie sinnvoll sein kann, auch als Deckelschicht eine (in Massenfertigung billig herstellbare) Kanalschicht zu verwenden.

Wie bereits ausgeführt, bilden in jeder Schicht die dünneren Bereiche den wenigstens einen Kanal des wenigstens einen Ersterhitzerteils, den wenigstens einen Kanal des wenigstens einen Zweiterhitzerteils und wenigstens einen zwischen zwei Erhitzerteilen ausgebildeten Zwischenraum. In dieser Anordnung läßt sich dies beispielsweise mittels üblicher Fräs- oder Ätztechnik leicht herstellen. Eine solche Ätz- beziehungsweise Frästechnik kann in einer bevorzugten Ausführungsform der vorliegenden Erfindung auch dazu verwendet werden, den dünneren Bereich der Schicht im Bereich eines Zwischenraums mit komplett durch die Schichten durchreichenden Öffnungen zu versehen, welche eine beliebige Form und Größe haben können, solange die Stabilität der Schichten gewährleistet ist, um auf diese Weise zu erreichen, daß beim Stapeln der einzelnen Schichten des Verdampfers die Zwischenräume der einzelnen Schichten miteinander in Verbindung treten und dadurch einen oder mehrere größere Zwischenräume bilden, welche die Verdampfung und Homogenisierung des in den wenigstens einen Zwischenraum gelangenden Mediums weiter verbessern. Die konkrete Formgebung kann hierbei auch zur Durchmischung etc. des Mediums beitragen.

Wenn die Vorrichtung schichtförmig aufgebaut ist, kann sich der Zwischenraum vorteilhaft durchgängig über zwei oder mehr Schichten erstrecken. In einem solchen Fall kann sich der Zwischenraum in "Höhenrichtung", das heißt beispielsweise senkrecht zur Längsausdehnung der Kanäle, über zwei oder mehr Schichten erstrecken. In den Zwischenraum münden dann Kanäle mehrerer aufeinanderfolgender Erhitzerteile ein beziehungsweise gehen von diesem ab.

Die erfindungsgemäße Vorrichtung kann weiterhin dadurch gekennzeichnet sein, daß der wenigstens eine Ersterhitzerteil und/oder der wenigstens eine Zweiterhitzerteil und/oder einzelne Ersterhitzerteile und/oder Zweiterhitzerteile untereinander unterschiedliche Wärmekapazitäten aufweisen. Vorteilhaft kann vorgesehen sein, daß der/die Ersterhitzerteil(e) eine größere Wärmekapazität aufweist/aufweisen als der/die Zweiterhitzerteil(e). Auf diese Weise kann der Aufwand bei einer evtl. vorzunehmenden Feinregulierung verkleinert werden. Die unterschiedlichen Wärmekapazitäten können beispielsweise dadurch realisiert werden, daß einzelne Erhitzerteile ein größeres Gesamtvolumen aufweisen, daß Kanäle einzelner Erhitzerteile ein größeres Kanalvolumen, eine größere Kanallänge, einen größeren Kanalquerschnitt, einen unterschiedlichen Kanaldurchmesser oder dergleichen aufweisen, daß einzelne Erhitzerteile aus unterschiedlichen Materialien bestehen und/oder unterschiedliche Anzahlen von Kanälen aufweisen, und dergleichen.

Vorzugsweise kann der wenigstens eine Ersterhitzerteil und/oder der wenigstens eine Zweiterhitzerteil und/oder einzelne Ersterhitzerteile und/oder Zweiterhitzerteile untereinander unterschiedliche Bauteilparameter aufweisen. Dabei ist die Erfindung nicht auf bestimmte Bauteilparameter beschränkt. Grundsätzlich wird unter einem Bauteilparameter jeder Parameter verstanden, durch den der jeweilige Erhitzerteil charakterisiert wird. Beispiele für unterschiedliche Bauteilparameter sind unter anderem unterschiedliche Gesamtvolumina der Erhitzerteile, unterschiedliche Kanalvolumina und Kanaldimensionen wie etwa Kanallängen, Kanalquerschnitte, Kanaldurchmesser und dergleichen, unterschiedliche Kanalzahlen pro Erhitzerteil, unterschiedliche Materialien, aus denen die Erhitzerteile gefertigt sind und dergleichen. Unter die Bauteilparameter lassen sich aber auch unterschiedliche Beschichtungen der Kanäle subsumieren, etwa Beschichtungen mit einem katalytischen Material, welches eine Verkokung verhindert, oder ähnliches.

Vorteilhaft können die Kanäle zweier aufeinander folgender Erhitzerteile zueinander parallel angeordnet sein. Das bedeutet zunächst, daß jeweils die Kanäle des wenigstens einen Ersterhitzerteils und/oder des wenigstens einen Zweiterhitzerteils untereinander parallel ausgerichtet sein können. Ebenso können die Kanäle der einzelnen Erhitzerteile auch in bezug aufeinander parallel ausgerichtet sein. Jeder Kanal eines Ersterhitzerteils ist somit auch parallel zu jedem der Kanal eines Zweiterhitzerteils. Sind Anordnung und Abstände der Kanäle des wenigstens einen Ersterhitzerteils und des wenigstens einen Zweiterhitzerteils identisch ausgelegt und ist deren Gesamtquerschnitt ebenfalls identisch, so wird dies in der Regel bedeuten, daß jeweils der Ausgang eines Kanals eines Ersterhitzerteils genau in Linie fluchtend mit einem Eingang eines Kanals eines nachfolgenden Ersterhitzerteils oder eines nachfolgendnen Zweiterhitzerteils zu liegen kommt. Für den wenigstens einen Zweiterhitzerteil gilt entsprechendes.

Vorteilhaft sind die Kanäle zweier aufeinander folgender Erhitzerteile zueinander versetzt angeordnet, so daß erhitztes Medium nicht direkt aus dem Ausgang von wenigstens einem Kanal eines Erhitzerteils in den Eingang von wenigstens einem Kanal des nachfolgenden Erhitzerteils schießen kann. Vielmehr wird erhitztes Medium, das aus dem/den Kanal/Kanälen eines Erhitzerteils austritt, auf die Kanalwand/Kanalwände des nachfolgenden Erhitzerteils prallen, wodurch die Verdampfung von noch flüssigen Bestandteilen des Mediums weiter vorangetrieben wird. Je nach Breite des Zwischenraums zwischen zwei Erhitzerteilen wird auf diese Weise die Möglichkeit weiter reduziert, daß Tröpfchen oder Pulsationen, die aus dem Kanal des ersten Erhitzerteils austreten, sich unmittelbar im Kanal des nachfolgenden zweiten Erhitzerteils fortsetzen, beispielsweise, indem das Tröpfchen aus dem Ausgang direkt in den Eingang hinüber schießt. Dadurch wird sicher verhindert, daß noch nicht verdampfte Bestandteile des Mediums aus der Vorrichtung austreten können.

Alternativ ist es auch möglich, Abstand oder Anordnung der Kanäle in zwei aufeinander folgenden Erhitzerteilen so zu variieren, daß dadurch die meisten der Kanäle zueinander versetzt zu liegen kommen. Bei einem Aufbau des erfindungsgemäßen Verdampfers aus mit Kanälen versehenen Schichten kann vorteilhaft eine einfache Versetzung der Kanaleingänge und -ausgänge zueinander vorgenommen werden.

In weiterer Ausgestaltung kann vorgesehen sein, daß die Kanäle zweier aufeinander folgender Erhitzerteile in einem Winkel zueinander ausgerichtet sind. Dabei können die einzelnen Kanäle schräg zueinander ausgerichtet sein. Ebenso ist denkbar, daß die Kanäle zweier aufeinander folgender Erhitzerteile in jeder beliebigen Kurvenform zueinander ausgerichtet sein. Durch eine solche Ausgestaltung kann die Prallfläche für das den wenigstens einen Kanal des Erhitzerteils verlassende Medium weiter vergrößert werden.

Der wenigstens eine Ersterhitzerteil dient beispielsweise zum Zuführen von Wärmeenergie zum Medium in einer Menge, die ausreichend ist, das gesamte Medium entweder im wenigstens einen Kanal oder im wenigstens einen Zwischenraum oder auch im wenigstens einen Zweiterhitzerteil komplett zu verdampfen. Hierzu ist in der Regel keine fein dosierbare Steuerung der Wärmezufuhr notwendig. Vielmehr ist es ausreichend, daß eben hinreichende Energiemengen zugeführt werden. Es ist jedoch auch vorstellbar, zur Erzielung besonderer Effekte den wenigstens einen Ersterhitzerteil mit einer fein dosierbaren Wärmezufuhr zu versehen.

In bevorzugten Ausführungsformen weisen daher die wenigstens eine erste und/oder die wenigstens eine zweite Heizvorrichtung eine Regelheizvorrichtung mit einer Feinregulierung zur Anpassung der Temperatur des wenigstens einen Kanals des wenigstens einen Ersterhitzerteils und/oder des wenigstens einen Zweiterhitzerteils zur Erzielung der vorgegebenen Temperatur des verdampften Mediums auf. Verschiedene Maßnahmen sind zur Erreichung des Ziels der Feinregulierung vorstellbar. So können schnell anspringende Temperatursensoren, eine entsprechende Länge der Kanäle im Erst- oder Zweiterhitzerteil und schnell wirksame Heizvorrichtungen wie beispielsweise elektrische, Heizungen mittels Licht oder dergleichen dem Ziel der Feinregulierung dienen.

Um die im wenigstens einen Zwischenraum des erfindungsgemäßen Verdampfers stattfindenden Vorgänge zu unterstützen, kann es des weiteren bevorzugt sein, daß in diesem/diesen zumindest eine Homogenisiervorrichtung zum Homogenisieren und/oder weiteren Verdampfen des erhitzten Mediums angeordnet ist. Eine solche Homogenisiervorrichtung kann beispielsweise wenigstens ein Prallgitter aufweisen, auf das beispielsweise aus dem wenigstens einen Kanal eines Erhitzerteils austretende Tröpfchen aufprallen, beziehungsweise wenigstens ein Lochgitter, welches eventuelle Tröpfchen und die anderen Bestandteile des Mediums nur in einer vorgegebenen Weise passieren läßt. Schließlich ist auch vorstellbar, daß die Homogenisiervorrichtung wenigstens eine Umlenkfläche zur Umlenkung und/oder Verwirbelung zumindest eines Teils des erhitzten Mediums aufweist.

Mehrere der oben genannten oder weiterer geeigneter Elemente können gleichzeitig im wenigstens einen Zwischenraum angeordnet sein. Des weiteren ist es möglich, diese oder eine spezielle Vorrichtung beheizbar auszulegen, um auch im Zwischenraum die notwendige Temperatur aufrechtzuerhalten, die es erlaubt, daß das Medium verdampft.

Damit sowohl der wenigstens eine Ersterhitzerteil als auch der wenigstens eine Zweiterhitzerteil ihre jeweiligen Aufgaben optimal erfüllen können, kann es weiterhin sinnvoll sein, diese voneinander und/oder untereinander thermisch zu entkoppeln oder nur eine geringe Kopplung zuzulassen. Es ist daher bevorzugt, diese voneinander thermisch zu trennen, was sowohl eine vollständige Entkopplung als auch noch eine geringe Entkopplung enthalten soll.

Die Erfindung ist weiterhin auf ein Verfahren zum Verdampfen eines flüssigen Mediums in einer wie vorstehend beschriebenen erfindungsgemäßen Vorrichtung gerichtet, wobei für das Verfahren alles oben bezüglich der Vorrichtung Gesagte in gleicher Weise gilt, so daß auf dieses verwiesen und vollinhaltlich Bezug genommen wird. Das erfindungsgemäße Verfahren weist folgende Schritte auf:
- Erhitzen eines flüssigen Mediums in wenigstens einem Ersterhitzerkanal;
- Verwirbeln und/oder Homogenisieren des erhitzten Mediums in wenigstens einem Zwischenraum; und
- Weiteres Erhitzen des Mediums in wenigstens einem Zweiterhitzerkanal, vorzugsweise auf eine vorgegebene Temperatur.

Hierbei kann das Verwirbeln und/oder Homogenisieren bereits zum Verdampfen des Mediums führen. Es kann jedoch auch sein, daß eine vollständige Verdampfung des Mediums erst in den Zweiterhitzerkanälen erfolgt. Auch ist es möglich, daß bereits in den Erhitzerkanälen eine weitgehend vollständige Verdampfung erfolgt.

Bei dem erfindungsgemäßen Verfahren ist eine starre Reihenfolge der Verfahrensschritte nicht unbedingt erforderlich, da auch zwischen wenigstens zwei Ersterhitzerteilen und/oder Zweiterhitzerteilen jeweils wenigstens ein Zwischenraum vorgesehen sein kann, so daß auch in diesen Zwischenräumen der Homogenisierschritt und/oder der Verwirbelungsschritt stattfinden kann. Grundsätzlich gilt, daß jeweils in einem Zwischenraum zwischen zwei Erhitzerteilen ein solcher Schritt vorteilhaft durchgeführt werden kann.

Das Erhitzen kann beispielsweise folgende Schritte aufweisen:
- Erhitzen des wenigstens eine Ersterhitzerkanals; und
- Durchleiten eines flüssigen Mediums durch den wenigstens einen Ersterhitzerkanal.

Beides geschieht bevorzugt gleichzeitig, kann jedoch auch nacheinander und/oder in beliebiger Reihenfolge oder dergleichen geschehen. Das Erhitzen muß danach fortwährend fortgesetzt oder regelmäßig wiederholt werden, da durch den Verdampfungsprozeß das zu verflüssigende Medium den Ersterhitzerkanälen Energie entzieht und damit zu deren Abkühlung beiträgt.

Das Verwirbeln und/oder Homogenisieren erfolgt vorzugsweise durch Durchleiten des erhitzten Mediums durch den wenigstens einen Zwischenraum. Dieser Zwischenraum kann beispielsweise speziell ausgestaltet sein. Die spezielle Ausgestaltung kann beispielsweise in der Anordnung von Prall- oder Lochgittern, Verwirbelern oder ähnlichen Vorrichtungen bestehen. Es kann auch darin bestehen, daß die Ausgänge und Eingänge der jeweiligen Kanäle zueinander versetzt sind, wie oben erläutert.

Das weitere Erhitzen auf eine vorgegebene Temperatur kann folgende Schritte aufweisen:
- Durchleiten des Mediums durch den wenigstens einen Zweiterhitzerkanal; und
- Feinregeln der Temperatur des wenigstens einen Zweiterhitzerkanals auf Werte, die dazu führen, daß das Medium nach dem Durchleiten durch den wenigstens einen Zweiterhitzerkanal homogen verdampft ist und die vorgegebene Temperatur aufweist.

Wenn die Verdampfung beispielsweise im allgemeinen im wenigstens einen Ersterhitzerkanal und im daran sich anschließenden wenigstens einen Zwischenraum erfolgt, kann man bei der weiteren Temperaturerhöhung auf den vorgegebenen Wert in sich anschließenden Ersterhitzerkanälen und/oder Zweiterhitzerkanälen auch von einer Überhitzung des Mediums sprechen.

Wenn als Medium beispielsweise Methanol verdampft wird, kann dieses beispielsweise auf eine Temperatur von 280 °C bis 320 °C feinreguliert werden.

Das Erhitzen des flüssigen Mediums im wenigstens einen Ersterhitzerteil führt vorzugsweise zum Verdampfen eines Hauptteils des Mediums. Auf diese Weise läßt sich sicherstellen, daß in dem wenigstens einen nach dem Erhitzen erfolgenden Verwirbelungsschritt die restlose Verdampfung des noch nicht verdampften Mediums möglich ist.

Das Verwirbeln und/oder Homogenisieren führt vorzugsweise zu einem gleichmäßigen Verdampfen des gesamten Mediums. Unter dem gesamten Medium ist zu verstehen, daß bis auf einen vernachlässigbar kleinen Teil, beispielsweise kleiner als 1 oder 0,5 Prozent, das gesamte Medium verdampft, das heißt in einen gasförmigen Zustand überführt ist. Vorzugsweise sind der wenigstens eine Ersterhitzerkanal, der/die Zwischenraum/ Zwischenräume und der wenigstens eine Zweiterhitzerkanal miteinander verbunden, so daß alle Einleitschritte (das heißt Einleiten in den wenigstens einen Ersterhitzerkanal, in den/die Zwischenraum/Zwischenräume und in den wenigstens einen Zweiterhitzerkanal) durch Einpumpen des flüssigen Mediums in den Eingang des wenigstens einen Ersterhitzerkanals des ersten Ersterhitzerteils erfolgt, wobei durch den erzeugten Überdruck die Durchleitung durch den wenigstens einen Ersterhitzerkanal, den/die Zwischenraum/Zwischenräume und den wenigstens einen Zweiterhitzerkanal erfolgt. Es werden also keine weiteren Pumpvorgänge innerhalb des Verdampfers benötigt, vielmehr ist der in seinem Eingang erzeugte Überdruck ausreichend, das gesamte Verfahren zum Abschluß zu bringen, indem durch den aufgebauten Überdruck und das nachströmende Medium eine komplette Durchführung des Mediums durch den Verdampfer und durch den Prozeß gewährleistet ist. Auch das Verdampfen des Mediums trägt zur Druckregulierung und damit zur Weiterleitung des Mediums bei.

Erfindungsgemäß wird das Verfahren gemäß der Erfindung mit einer erfindungsgemäßen Vorrichtung durchgeführt. Hierbei sind die Ersterhitzerkanäle die Kanäle des wenigstens einen Ersterhitzerteils und die Zweiterhitzerkanäle die Kanäle des wenigstens einen Zweiterhitzerteils.

Im folgenden soll die Erfindung an Hand eines konkretisierten Ausführungsbeispiels erläutert werden, wobei auf die beigefügten Zeichnungen Bezug genommen wird, in denen folgendes dargestellt ist:
Figur 1 zeigt einen schematisierten Längsschnitt durch eine erste Ausführungsform einer erfindungsgemäßen Verdampfungsvorrichtung; und
Figur 2 zeigt eine beispielsweise in Mikrostrukturtechnik ausgeführte Einzelschicht eines schichtweise aufgebauten erfindungsgemäßen Verdampfers.

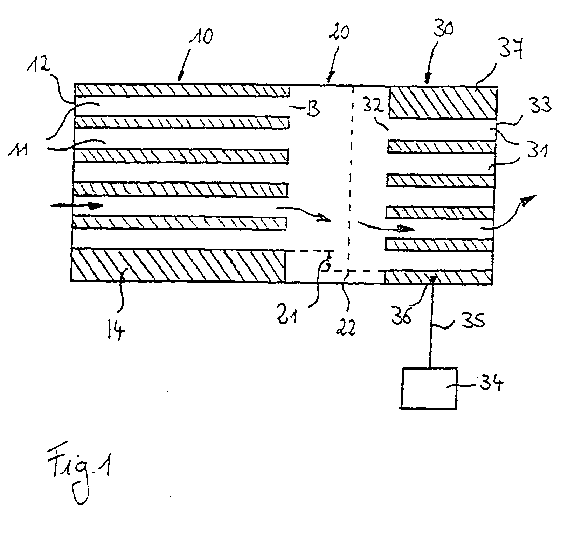

Der in Figur 1 gezeigte erfindungsgemäße Verdampfer besteht aus dem Ersterhitzerteil 10, einem Zwischenraum 20 und dem Zweiterhitzerteil 30. Selbstverständlich sind jeweils auch mehrere Ersterhitzerteile und/oder Zweiterhitzerteile denkbar, die über entsprechende Zwischenräume miteinander verbunden sind. Der besseren Übersicht halber sind im vorliegenden Ausführungsbeispiel jedoch nur ein Ersterhitzerteil 10 und ein Zweiterhitzerteil 30 dargestellt, die über einen einzigen Zwischenraum 20 miteinander verbunden sind.

Der Ersterhitzerteil 10 besteht wiederum aus einem Block 14, in den Kanäle (Ersterhitzerkanäle) 11, die parallel zueinander liegen, eingebracht sind. Die Kanäle 11 weisen Eingänge 12 auf, über die ein noch flüssiges Medium den Kanälen 11 zugeführt wird, sowie Ausgänge 13, die das erhitzte Medium dem Zwischenraum 20 zuführen. Der Strömungsweg des Mediums durch den Verdampfer ist durch entsprechende Pfeile dargestellt. Gleichermaßen ist der Zweiterhitzerteil 30 aus einem Block 37 aufgebaut, in den Kanäle (Zweiterhitzerkanäle) 31 eingearbeitet sind. Diese weisen Eingänge 32 auf, welche das Medium aus dem Zwischenraum aufnehmen und in die Kanäle 31 einleiten, sowie Ausgänge 33 am Ausgang der erfindungsgemäßen Vorrichtung, von denen das gleichmäßig verdampfte Medium, vorzugsweise bei einer vorgegebenen Temperatur, abgenommen wird, um es beispielsweise einem Reformer oder ähnlichem zuführen zu können. In der gezeigten Ausführungsform weist der Zwischenraum 20 weiterhin ein Lochgitter 22 auf, das der weiteren Homogenisierung des verdampften Mediums dient. Wie aus Figur 1 ersichtlich, sind hier die Kanäle 11 gegenüber den Kanälen 31 in Längsrichtung versetzt, wobei die Versetzung um einen Abstand 21 erfolgt. Zur Verdeutlichung ist weiterhin eine Regeleinrichtung 34 dargestellt, welche über zumindest einen Sensor 36 und eine Meßleitung 35, die aktuell im Zweiterhitzerteil 30 vorhandene Temperatur erfaßt, und dementsprechend eine nicht dargestellte Heizvorrichtung zum Aufheizen des Zweiterhitzerteils 30 ansteuert.

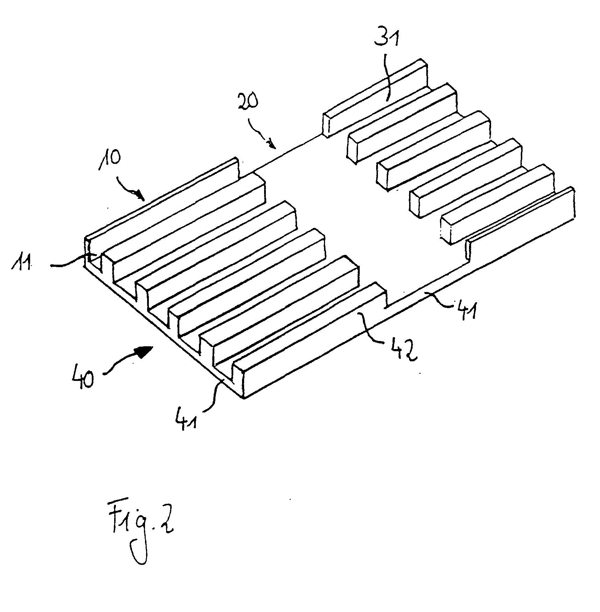

Figur 2 zeigt eine einzelne Schicht eines schichtweise aufgebauten Verdampfers gemäß der vorliegenden Erfindung. Gleiche Bezugszeichen sollen hierbei gleiche Elemente kennzeichnen. Die Schicht 40 besteht aus dünneren Bereichen 41, welche den Zwischenraum 20 sowie die Kanäle 11 und 31 formen, sowie aus dickeren Bereichen 42, welche die Wandungen zwischen den Kanälen bilden.

Die Verdampfervorrichtung gemäß der vorliegenden Erfindung weist verschiedene Vorteile auf. So kann eine zuverlässige Tröpfchenvermeidung durch den zweistufigen Prozeß mit dem zwischengeschalteten Verwirbelungsschritt im Zwischenraum erreicht werden. Die Temperaturregelung auf die vorgegebene Temperatur des verdampften Mediums ist einfacher, da nur noch eine Heizleistung für einen kleinen Anteil der gesamten zugeführten Energie fein geregelt werden muß, während der größere Teil der zugeführten Energie über eine Grobregelung geregelt werden kann. Dieser Vorteil stellt sich insbesondere bei einer thermischen Entkopplung von Ersterhitzerteil 10 und Zweiterhitzerteil 30 ein, wobei thermische Umladevorgänge entfallen. Der Zweiterhitzerteil 30 weist typischerweise eine kleinere Wärmekapazität auf und ist insgesamt kleiner und leichter, was zu der verkleinerten Wärmekapazität und damit der einfacheren Feinregulierung beiträgt.

## Patentansprüche

1. Vorrichtung zum Verdampfen flüssiger Medien, **gekennzeichnet durch** wenigstens einen Ersterhitzerteil (10) zum Erhitzen eines flüssigen Mediums mit wenigstens einem Kanal (11) zum Duchleiten des Mediums und wenigstens einer ersten Heizvorrichtung;
wenigstens einen Zweiterhitzerteil (30) zur weiteren Erhitzung des erhitzen Mediums, mit wenigstens einem Kanal (31) zum Durchleiten des Mediums und wenigstens einer zweiten Heizvorrichtung; und
zumindest einen Zwischenraum (20) zwischen einem Ersterhitzerteil (10) und einem Zweiterhitzerteil (30) und/oder zwischen zwei Ersterhitzerteilen und/oder zwischen zwei Zweiterhitzerteilen zum Homogenisieren und/oder Verwirbeln und/oder weiteren Verdampfen sowie zum Weiterleiten des erhitzten Mediums vom Ausgang wenigstens eines Kanals eines Erhitzerteils zum Eingang wenigstens eines Kanals eines folgenden Erhitzerteils.

2. Vorrichtung nach Anspruch 1, **dadurch gekennzeichnet, daß** diese wenigstens zwei übereinander angeordnete Schichten (40) aufweist, wobei jede der Schichten dünnere Bereiche (41) enthält, welche die vom Medium durchströmten Bereiche bilden, und dickere Bereiche (42), welche Wandungen zwischen den durchströmten Bereichen bilden und welche mit einer Rückseite einer benachbarten Schicht (40) oder einer Deckelschicht in Kontakt sind.

3. Vorrichtung nach Anspruch 2, **dadurch gekennzeichnet, daß** in jeder Schicht (40) die dünneren Bereiche (41) den wenigstens einen Kanal (11) des wenigstens einen Ersterhitzerteils (10), den wenigstens einen Kanal (31) des wenigstens einen Zweiterhitzerteils (30) und wenigstens einen zwischen zwei Erhitzerteilen ausgebildeten Zwischenraum (20) bilden.

4. Vorrichtung nach Anspruch 2 oder 3, **dadurch gekennzeichnet, daß** sich der Zwischenraum (20) durchgängig über zwei oder mehr Schichten (40) erstreckt.

5. Vorrichtung nach einem der Ansprüche 1 bis 4, **dadurch gekennzeichnet, daß** zumindest Bestandteile des wenigstens einen Ersterhitzerteils (10) und/oder des wenigstens einen Zweiterhitzerteils (30) in Mikrostrukturtechnik hergestellt sind.

6. Vorrichtung nach einem der Ansprüche 1 bis 5, **dadurch gekennzeichnet, daß** der wenigstens eine Ersterhitzerteil (10) und der wenigstens eine Zweiterhitzerteil (30) und/oder einzelne Ersterhitzerteile und/oder Zweiterhitzerteile untereinander unterschiedliche Wärmekapazitäten aufweisen.

7. Vorrichtung nach einem der Ansprüche 1 bis 6, **dadurch gekennzeichnet, daß** der wenigstens eine Ersterhitzerteil (10) und der wenigstens eine Zweiterhitzerteil (30) und/oder einzelne Ersterhitzerteile und/oder Zweiterhitzerteile untereinander unterschiedliche Bauteilparameter aufweisen.

8. Vorrichtung nach einem der Ansprüche 1 bis 7, **dadurch gekennzeichnet, daß** die Kanäle zweier aufeinander folgender Erhitzerteile zueinander parallel angeordnet sind und/oder daß die Kanäle zweier aufeinander folgender Erhitzerteile zueinander versetzt angeordnet sind und/oder daß die Kanäle zweier aufeinander folgender Erhitzerteile in einem Winkel und/oder in Kurvenform zueinander ausgerichtet sind.

9. Vorrichtung nach einem der Ansprüche 1 bis 8, **dadurch gekennzeichnet, daß** die wenigstens eine erste und/oder die wenigstens eine zweite Heizvorrichtung aufweist eine Feinregulierung (34, 35, 36) zur Anpassung der Temperatur des wenigstens einen Kanals (11, 31) des wenigstens einen Ersterhitzerteils und/oder des wenigstens einen Zweiterhitzerteils (30) zur Erzielung einer vorgegebenen Temperatur des verdampften Mediums.

10. Vorrichtung nach einem der Ansprüche 1 bis 9, **dadurch gekennzeichnet, daß** im wenigstens einen Zwischenraum (20) zumindest eine Homogenisiervorrichtung (22) zum Homogenisieren und/oder weiteren Verdampfen des erhitzten Mediums angeordnet ist.

11. Vorrichtung nach Anspruch 10, **dadurch gekennzeichnet, daß** die zumindest eine Homogenisiervorrichtung (22) wenigstens ein Prallgitter und/oder wenigstens ein Lochgitter und/oder wenigstens eine Umlenkfläche zur Umlenkung und/oder Verwirbelung zumindest eines Teils des erhitzten Mediums aufweist.

12. Vorrichtung nach einem der Ansprüche 1 bis 11, **dadurch gekennzeichnet, daß** der wenigstens eine Ersterhitzerteil (10) und/oder der wenigstens eine Zweiterhitzerteil (30) voneinander und/oder untereinander thermisch getrennt sind.

13. Verfahren zum Verdampfen eines flüssigen Mediums in einer Vorrichtung gemäß einem der Ansprüche 1 bis 12, **gekennzeichnet durch** folgende Schritte: Erhitzen eines flüssigen Mediums in wenigstens einem Ersterhitzerkanal (11); Verwirbeln und/oder Homogenisieren des erhitzten Mediums in wenigstens einem Zwischenraum (20); und weiteres Erhitzen des homogen verdampften Mediums in wenigstens einem Zweiterhitzerkanal (31), vorzugsweise auf eine vorgegebene Temperatur.

14. Verfahren nach Anspruch 13, **dadurch gekennzeichnet, daß** das Erhitzen die Schritte Erhitzen des wenigstens einen Ersterhitzerkanals (11) und Durchleiten eines flüssigen Mediums durch den wenigstens einen Ersterhitzerkanal (11) aufweist

15. Verfahren nach Anspruch 13 oder 14, **dadurch gekennzeichnet, daß** das Verwirbeln und/oder Homogenisieren durch Durchleiten des erhitzten Mediums durch den wenigsten einen Zwischenraum (20) erfolgt.

16. Verfahrern nach einem der Ansprüche 13 bis 15, **dadurch gekennzeichnet, daß** das weitere Erhitzen auf die vorgegebene Temperatur folgende Schritte aufweist: Durchleiten des Mediums durch den wenigstens einen Zweiterhitzerkanal (31); und Feinregeln der Temperatur des wenigstens einen Zweiterhitzerkanals (31) auf Werte, die dazu führen, daß das Medium nach dem Durchleiten durch den wenigstens einen Zweiterhitzerkanal (31) homogen verdampft ist und die vorgegebene Temperatur aufweist.

17. Verfahren nach einem der Ansprüche 13 bis 16, **dadurch gekennzeichnet, daß** das Erhitzen des flüssigen Mediums in dem wenigstens einen Ersterhitzerkanal zum Verdampfen eines Hauptteils des Mediums führt.

18. Verfahren nach einem der Ansprüche 13 bis 17, **dadurch gekennzeichnet, daß** das Verwirbeln und/oder Homogenisieren zu einem gleichmäßigen Verdampfen des gesamten Mediums führt.

19. Verfahren nach einem der Ansprüche 13 bis 18, **dadurch gekennzeichnet, daß** der wenigstens eine Ersterhitzerkanal (11), der/die Zwischenraum/ Zwischenräume (20) und der wenigstens eine Zweiterhitzerkanal (31) miteinander verbunden sind und daß alle Einleitschritte durch Einpumpen des flüssigen Mediums in wenigstens einen Eingang (12) des wenigstens einen Ersterhitzerkanals (11) eines ersten Ersterhitzerteils (10) erfolgen, wobei durch den erzeugten Überdruck die Durchleitung durch den wenigstens einen Ersterhitzerkanal (11), den/die Zwischenraum/Zwischenräume (20) und den wenigstens einen Zweiterhitzerkanal (31) erfolgt.

## Claims

1. Device for evaporating liquid media, **characterised by** at least one first heater part (10) for heating a liquid medium, having at least one channel (11) for conveying the medium and at least one first heating device;
at least one second heater part (30) for further heating the heated medium, having at least one channel (31) for conveying the medium and at least one second heating device; and
at least one intermediate space (20) between a first heater part (10) and a second heater part (30) and/or between two first heater parts and/or between two second heater parts for homogenising and/or swirling and/or further evaporating and further conveying the heated medium from the outlet of at least one channel of a heater part to the inlet of at least one channel of a subsequent heater part.

2. Device according to claim 1, **characterised in that** it comprises at least two layers (40) arranged one above the other, each of the layers having thinner regions (41) which form the regions through which the medium flows, and thicker regions (42) which form walls between the regions through which the medium flows and which are in contact with a reverse side of an adjacent layer (40) or a covering layer.

3. Device according to claim 2, **characterised in that** in each layer (40) the thinner regions (41) form the at least one channel (11) of the at least one first heater part (10), the at least one channel (31) of the at least one second heater part (30) and at least one intermediate space (20) formed between two heater parts.

4. Device according to claim 2 or 3, **characterised in that** the intermediate space (20) extends right through two or more layers (40).

5. Device according to one of claims 1 to 4, **characterised in that** at least components of the at least one first heater part (10) and/or the at least one second heater part (30) are produced by micro-engineering.

6. Device according to one of claims 1 to 5, **characterised in that** the at least one first heater part (10) and the at least one second heater part (30) and/or individual first heater parts and/or second heater parts have different heat capacities from one another.

7. Device according to one of claims 1 to 6, **characterised in that** the at least one first heater part (10) and the at least one second heater part (30) and/or individual first heater parts and/or second heater parts have different component parameters from one another.

8. Device according to one of claims 1 to 7, **characterised in that** the channels of two successive heater parts are arranged parallel to one another and/or the channels of two successive heater parts are arranged offset from one another and/or the channels of two successive heater parts are aligned at an angle and/or in a curved configuration relative to one another.

9. Device according to one of claims 1 to 8, **characterised in that** the at least one first and/or the at least one second heating device comprises a fine regulator (34, 35, 36) for adapting the temperature of the at least one channel (11, 31) of the at least one first heater part and/or of the at least one second heater part (30) in order to achieve a prescribed temperature of the evaporated medium.

10. Device according to one of claims 1 to 9, **characterised in that** in the at least one intermediate space (20) is provided at least one homogenising device (22) for homogenising and/or further evaporating the heated medium.

11. Device according to claim 10, **characterised in that** the at least one homogenising device (22) comprises at least one impact grid and/or at least one perforated grid and/or at least one deflector surface for deflecting and/or swirling at least part of the heated medium.

12. Device according to one of claims 1 to 11, **characterised in that** the at least one first heater part (10) and/or the at least one second heater part (30) are thermally separated from one another and/or among one another.

13. Method of evaporating a liquid medium in a device according to one of claims 1 to 12, **characterised by** the following steps:
heating a liquid medium in at least one first heater channel (11); swirling and/or homogenising the heated medium in at least one intermediate space (20); and further
heating the homogeneously evaporated medium in at least one second heater channel (31), preferably to a prescribed temperature.

14. Method according to claim 13, **characterised in that** the heating comprises the steps of heating the at least one first heater channel (11) and passing a liquid medium through the at least one first heater channel (11).

15. Method according to claim 13 or 14, **characterised in that** the swirling and/or homogenisation is carried out by passing the heated medium through the at least one intermediate space (20).

16. Method according to one of claims 13 to 15, **characterised in that** the further heating to the prescribed temperature comprises the following steps: passing the medium through the at least one second heater channel (31); and finely regulating the temperature of the at least one second heater channel (31) to values that ensure that the medium is homogeneously evaporated after passing through the at least one second heater channel (31) and is at the prescribed temperature.

17. Method according to one of claims 13 to 16, **characterised in that** the heating of the liquid medium in the at least one first heater channel leads to the evaporation of a majority of the medium.

18. Method according to one of claims 13 to 17, **characterised in that** the swirling and/or homogenisation leads to uniform evaporation of the entire medium.

19. Method according to one of claims 13 to 18, **characterised in that** the at least one first heater channel (11), the intermediate space or spaces (20) and the at least one second heater channel (31) are connected to one another and all the initiating steps are carried out by pumping the liquid medium into at least one input (12) of the at least one first heater channel (11) of a first first heater part (10), the resulting excess pressure causing the liquid medium to pass through the at least one first heater channel (11), the intermediate space or spaces (20) and the at least one second heater channel (31).

## Revendications

1. Dispositif d'évaporation de produits liquides, **caractérisé par** au moins une partie de premier réchauffement (10) servant à chauffer un produit liquide avec au moins un canal (11) permettant de faire circuler le produit et au moins un premier dispositif de chauffage ;
au moins une partie de second réchauffement (30) servant à poursuivre le réchauffement du produit réchauffé, avec au moins un canal (31) permettant de faire circuler le produit et au moins un deuxième dispositif de chauffage ; et
au moins un compartiment intermédiaire (20) entre une partie de premier réchauffement (10) et une partie de second réchauffement (30) et/ou entre deux parties de premier réchauffement et/ou entre deux parties de second réchauffement servant à homogénéiser et/ou à faire tourbillonner et/ou à poursuive l'évaporation ainsi qu'à conduire le produit de la sortie d'au moins un canal d'une partie de réchauffement vers l'entrée d'au moins un canal d'une partie de réchauffement suivante.

2. Dispositif selon la revendication 1, **caractérisé en ce que** celui-ci présente deux couches (40) superposées, sachant que chacune des couches comporte des zones plus minces (41), lesquelles forment les zones traversées par le produit, et des zones plus épaisses (42), lesquelles forment des parois entre les zones traversées et lesquelles sont en contact avec le verso d'une couche voisine (40) ou d'une chape.

3. Dispositif selon la revendication 2, **caractérisé en ce que** dans chaque couche (40) les zones plus minces (40) forment le canal (11) au moins au nombre de un de la partie de premier réchauffement (10) au moins au nombre de une, le canal (31) au moins au nombre de un de la partie de second réchauffement (30) au moins au nombre de une, et au moins un compartiment intermédiaire (20) formé entre deux parties de réchauffement.

4. Dispositif selon la revendication 2 ou 3, **caractérisé en ce que** le compartiment intermédiaire (20) s'étire en continu sur deux couches (40) ou plus

5. Dispositif selon l'une des revendications 1 à 4, **caractérisé en ce que** au moins des composants de la partie de premier réchauffement (10) au moins au nombre de une et/ou de la partie de second réchauffement (30) au moins au nombre de une sont fabriqués selon la technique de microstructure.

6. Dispositif selon l'une des revendications 1 à 5, **caractérisé en ce que** la partie de premier réchauffement (10) au moins au nombre de une et la partie de second réchauffement (30) au moins au nombre de une et/ou des parties de premier réchauffement et/ou de second réchauffement individuelles présentent différentes capacités thermiques.

7. Dispositif selon l'une des revendications 1 à 6, **caractérisé en ce que** la partie de premier réchauffement (10) au moins au nombre de une et la partie de second réchauffement (30) au moins au nombre de une et/ou des parties de premier réchauffement et/ou de second réchauffement individuelles présentent différents paramètres de composants.

8. Dispositif selon l'une des revendications 1 à 7, **caractérisé en ce que** les canaux de deux parties de réchauffement successives sont parallèles et/ou **en ce que** les canaux de deux parties de réchauffement successives sont décalés et/ou **en ce que** les canaux de deux parties de réchauffement successives sont orientés selon un angle et/ou une courbe.

9. Dispositif selon l'une des revendications 1 à 8, **caractérisé en ce que** le premier dispositif et/ou le second dispositif de réchauffement, chacun au moins au nombre de un, présente une régulation de précision (34, 35, 36) servant à ajuster la température du canal (11, 31) au moins au nombre de un de la partie de premier réchauffement au moins au nombre de une et/ou de la partie de second réchauffement (30) au moins au nombre de une, afin d'obtenir une température prescrite du produit en évaporation.

10. Dispositif selon l'une des revendications 1 à 9, **caractérisé en ce que** dans le compartiment intermédiaire (22) au moins au nombre de un, est disposé au moins un dispositif d'homogénéisation (22) servant à homogénéiser et/ou à poursuivre l'évaporation du produit chauffé.

11. Dispositif selon la revendication 10, **caractérisé en ce que** le dispositif d'homogénéisation (22) au moins au nombre de un, présente au moins une grille et/ou au moins une grille perforée et/ou au moins une surface de déviation servant à dévier et/ou à remuer au moins une partie du produit chauffé.

12. Dispositif selon l'une des revendications 1 à 11, **caractérisé en ce que** la partie de premier réchauffement (10) au moins au nombre de une, et/ou la partie de second réchauffement (30) au moins au nombre de une sont thermiquement séparées l'une de l'autre.

13. Procédé d'évaporation d'un produit liquide dans un dispositif conformément à l'une des revendications 1 à 12, **caractérisé par** les étapes suivantes : réchauffement d'un produit liquide dans au moins un canal de premier réchauffement (11) ; tourbillonnement et/ou homogénéisation du produit chauffé dans au moins un compartiment intermédiaire (20) ; et poursuite du réchauffement du liquide évaporé de façon homogène dans au moins un canal de second réchauffement (31), de préférence à une température prescrite.

14. Procédé selon la revendication 13, **caractérisé en ce que** le réchauffement comporte les étapes de réchauffement du canal de premier réchauffement (11) au moins au nombre de un et le passage d'un produit liquide à travers le canal de premier réchauffement (11) au moins au nombre de un.

15. Procédé selon la revendication 13 ou 14, **caractérisé en ce que** le tourbillonnement et/ou l'homogénéisation du produit réchauffé se fait par le compartiment intermédiaire (20) au moins au nombre de un.

16. Procédé selon l'une des revendications 13 à 15 **caractérisé en ce que** la poursuite du réchauffement à la température prescrite présente les étapes suivantes : passage du produit à travers le canal de second réchauffement (31) au moins au nombre de un ; et réglage précis de la température du canal de second réchauffement (31) au moins au nombre de un, sur des valeurs qui permettent qu'après le passage du produit à travers le canal de second réchauffement (31) au moins au nombre de un, celui-ci s'évapore de façon homogène et est à la température prescrite.

17. Procédé selon l'une des revendications 13 à 16 **caractérisé en ce que** le réchauffement du produit liquide dans le canal de premier réchauffement au moins au nombre de un, conduit à l'évaporation de la plus grande partie du produit.

18. Procédé selon l'une des revendications 13 à 17 **caractérisé en ce que** le tourbillonnement et/ou l'homogénéisation conduit à une évaporation homogène de tout le produit.

19. Procédé selon l'une des revendications 13 à 18, **caractérisé en ce que** le canal de premier réchauffement (11) au moins au nombre de un, le ou les compartiments intermédiaires (20) et le canal de second réchauffement (31) au moins au nombre de un sont reliés les uns aux autres et **en ce que** toutes les étapes d'introduction se font par pompage du produit liquide dans au moins une entrée (12) du canal de premier réchauffement (11) au moins au nombre de un d'une première partie de premier réchauffement (10), sachant que le passage à travers le canal de premier réchauffement (11) au moins au nombre de un, le ou les compartiments intermédiaires (20) et le canal de second réchauffement (31) au moins au nombre de un, est assuré par la surpression créée.
